# EUROPEAN PATENT APPLICATION

(11) **EP 4 765 859 A1**
(43) Date of publication of application: **24.06.2026**
(21) Application number: 25223758.1
(22) Date of filing: 16.12.2025
(51) Int. Cl.: H04Q 11/00, H04L 41/0893, H04L 41/0895

(54) **SYSTEMS AND METHODS FOR IMPLEMENTING NETWORK SLICING IN OPTICAL ACCESS NETWORKS**

(30) Priority: 17.12.2024 US 202418983702
(71) Applicant: Avago Technologies International Sales Pte. Limited, Singapore 768923 (SG)
(72) Inventor: Holtz, Shay, Irvine, 92618 (US); Gorsetman, Yoram, Irvine, 92618 (US); Dimeo, Frank, Irvine, 92618 (US); Glik, Michael, Irvine, 92618 (US)
(74) Representative: Dilg, Haeusler, Schindelmann Patentanwaltsgesellschaft mbH

(57) **Abstract**

The disclosure describes systems and methods for implementing network slicing in optical access networks. The system can identify a plurality of allocation identifiers corresponding to a plurality of optical network units in a passive optical network. Each of the plurality of allocation identifiers can have one or more properties. The system can establish one or more slices, where each of the one or more slices can include a set of allocation identifiers of one or more flows having a common property of the one or more properties. The system can allocate a portion of bandwidth to each of the one or more slices. The system can associate the one or more slices with one or more virtual network operators.

## Description

### FIELD OF THE DISCLOSURE

This disclosure generally relates to passive optical networks and, more particularly, to systems and methods for implementing network slicing.

### BACKGROUND

A passive optical network (PON) is a point-to-multipoint architecture that distributes data from a central location to multiple endpoints. In a PON, an optical line terminal (OLT) broadcasts data to multiple optical network units (ONUs) located at the network's endpoints. The ONUs, in turn, transmit data back to the OLT in the upstream direction. PONs are capable of supporting a wide range of services, including data, voice, and video. In this regard, effective bandwidth allocation can help satisfy diverse service demands.

### SUMMARY

The technical solutions of the present disclosure are directed to implementing effective network slicing and dynamic bandwidth allocation (DBA) in passive optical networks (PONs). Wireless networks support a wide range of applications, including web browsing, real-time communication, and entertainment such as audio/video conferencing and online gaming, all of which desire efficient data transmission and low latency delivery to maintain seamless user experiences. However, latency sensitive applications can experience significant degradation due to delays in data transmission. In PONs, DBA algorithms are used to improve data transmission, but these algorithms may not be well-suited to support multiple, diverse services. For example, DBA mechanisms in PONs are configured for single-network-operator environments with exclusive access to all hardware resources, but next-generation deployments demand a more flexible approach to allow multiple network operators to share the same PON infrastructure. As a result, DBA algorithms that rely on fixed-size time frames (e.g., 1 ms) for bandwidth distribution may lack the adaptability to accommodate the bursty traffic patterns of real-time applications, demanding more dynamic and flexible bandwidth allocation mechanisms.

Additionally, providing differentiated quality of service (QoS) guarantees for various applications and services via network slicing can be challenging, as the infrastructure provider is to allocate the appropriate bandwidth, latency, and priority to services such as online gaming, virtual reality, and internet protocol television (IPTV) when sharing the physical PON port. In this regard, achieving these guarantees desires efficient allocation of resources to satisfy the specific QoS demands of each application. Furthermore, managing multiple virtual network operators (VNOs) within the same PON infrastructure can present challenges. For example, associating multiple virtual network operators (VNOs) with network slices and efficiently allocating resources to each VNO to meet its specific service-level agreement (SLA) demands can become increasingly complex, especially when traffic patterns and QoS demands vary. When multiple VNOs share a single slice, each with potentially conflicting QoS demands, resource allocation and prioritization are to be carefully managed to prevent performance degradation across services. Consequently, resource management and DBA mechanisms are to be adapted to address the evolving demands for multi-operator environments and provide high-quality service delivery across diverse applications and operators.

Moreover, dynamically allocating bandwidth to slices and their scheduling containers (T-CONTs) based on real-time network conditions and service demands can also be challenging, as can constructing bandwidth maps to facilitate fair and efficient resource distribution. In this regard, managing the relationships and attributes of network slicing objects can be important for effective bandwidth allocation in large-scale networks but can add complexity to object model management. These technical challenges can include providing differentiated QoS guarantees, fair bandwidth allocation, and efficient management of network slicing constructs while adapting to changing network conditions.

The technical solutions disclosed herein can address the challenges of implementing effective network slicing and dynamic bandwidth allocation (DBA) in passive optical networks (PONs) to support diverse services with varying quality of service (QoS) demands. The PON architecture can facilitate different service types, such as online gaming, virtual reality, and internet browsing, via network slicing. In this regard, a multi-level DBA mechanism can be implemented, where the bandwidth or latency demands of each VNO can be divided into smaller slices. Each slice can be configured with specific bandwidth, priority, and latency parameters to satisfy the demands of various services. Slices with similar characteristics can be combined into chunks, which can be fed into a second-level scheduler for bandwidth allocation on the optical infrastructure. For example, the configuration can classify slices into service levels, such as golden, silver, and bronze, to better satisfy the diverse QoS demands of different services. The PON architecture can also facilitate the association of one or more VNOs with network slices, where each VNO can be allocated guaranteed and maximum bandwidth to maintain equity in resource distribution and SLA compliance, thereby preventing resource contention and improving bandwidth utilization. Furthermore, the technical solutions can support the association of multiple VNOs with a single slice to allow shared use of high priority slices while maintaining service differentiation and preventing conflicts between SLAs.

The DBA algorithms disclosed herein can dynamically adjust bandwidth allocation based on real-time or near real-time network conditions and traffic patterns. This functionality can be further enhanced through a multilevel DBA implementation that incorporates virtual resource management, facilitating access to other shared resources such as network interfaces, buffers, queues, and schedulers. These enhancements can improve traffic management and resource utilization across the network. For example, the PON architecture can provide low latency for high priority services and efficient utilization of resources through rate-proportional and priority-based methods. Bandwidth maps can be generated to improve resource usage and minimize latency by evenly distributing bandwidth bursts for latency-sensitive services across multiple PHY frames. Furthermore, the PON architecture can facilitate defining a structured object model that specifies attributes and relationships for entities such as PON_SLICE, VNO, and ITUPON_ALLOC, simplifying the management of slices, allocation identifiers, and VNOs. The PON architecture described herein can improve the management of network slicing, enhance resource allocation efficiency, and support the delivery of diverse services in dynamic PON environments while maintaining equity and performance across shared network resources.

At least one aspect of the technical solutions is directed to a system of implementing network slicing in optical access networks. The system includes one or more processors coupled with memory. The system can identify a plurality of allocation identifiers corresponding to a plurality of optical network units (ONUs) in a passive optical network (PON). Each of the plurality of allocation identifiers can have one or more properties. The system can establish one or more slices, where each of the one or more slices can include a set of allocation identifiers of one or more flows having a common property of the one or more properties. The system can allocate a portion of bandwidth to each of the one or more slices. The system can associate the one or more slices with one or more virtual network operators (VNOs).

In some embodiments, the system can associate each allocation identifier of the plurality of allocation identifiers with a data stream in the PON, where the data stream can be associated with a slice of the one or more slices. Each slice can be associated with descriptor parameters. The descriptor parameters can include at least one of fixed bandwidth, assured bandwidth, maximum bandwidth, eligibility indicators, or priority settings. In some embodiments, the system can associate each ONU with the plurality of allocation identifiers, where each allocation identifier associated with the ONU can be associated with the one or more slices. In some embodiments, the system can update the bandwidth of the one or more slices based at least on a rate proportion or a priority level associated with the corresponding slice. In some embodiments, the system can update the bandwidth of the set of allocation identifiers of the corresponding slice based at least on a rate proportion or a priority level associated with each allocation identifier. In some embodiments, the system can interleave the one or more slices associated with the one or more VNOs. In some embodiments, the system can limit a total bandwidth for all allocation identifiers associated with each VNO to a predefined bandwidth limit. In some embodiments, the system can manage the one or more slices and the one or more VNOs using predefined objects. Each predefined object can specify attributes and relationships for a corresponding slice or VNO. In some embodiments, the system can associate the one or more VNOs with a slice of the one or more slices, where each slice can support a service level of a plurality of service levels. Each service level can correspond to a predefined priority or bandwidth allocation.

Another aspect of the technical solutions is directed to a method of implementing network slicing in optical access networks. The method can include identifying a plurality of allocation identifiers corresponding to a plurality of optical network units (ONUs) in a passive optical network (PON). Each of the plurality of allocation identifiers can have one or more properties. The method can include establishing one or more slices, where each of the one or more slices can include a set of allocation identifiers of one or more flows having a common property of the one or more properties. The method can include allocating a portion of bandwidth to each of the one or more slices. The method can include associating the one or more slices with one or more virtual network operators (VNOs).

In some embodiments, the method can include associating each allocation identifier of the plurality of allocation identifiers with a data stream in the PON, where the data stream can be associated with a slice of the one or more slices. Each slice can be associated with descriptor parameters. The descriptor parameters can include at least one of fixed bandwidth, assured bandwidth, maximum bandwidth, eligibility indicators, or priority settings. In some embodiments, the method can include associating each ONU with the plurality of allocation identifiers, where each allocation identifier associated with the ONU can be associated with the one or more slices. In some embodiments, the method can include updating the bandwidth of the one or more slices based at least on a rate proportion or a priority level associated with the corresponding slice. In some embodiments, the method can include updating the bandwidth of the set of allocation identifiers of the corresponding slice based at least on a rate proportion or a priority level associated with each allocation identifier. In some embodiments, the method can include interleaving the one or more slices associated with the one or more VNOs. In some embodiments, the method can include limiting a total bandwidth for all allocation identifiers associated with each VNO to a predefined bandwidth limit. In some embodiments, the method can include managing the one or more slices and the one or more VNOs using predefined objects. Each predefined object can specify attributes and relationships for a corresponding slice or VNO. In some embodiments, the method can include associating the one or more VNOs with a slice of the one or more slices, where each slice supports a service level of a plurality of service levels. Each service level can correspond to a predefined priority or bandwidth allocation.

Yet another aspect of the technical solutions is directed to a system of implementing network slicing in optical access networks. The system includes one or more processors coupled with memory. The system can monitor network traffic on a passive optical network (PON) to determine bandwidth usage for each of a plurality of optical network units (ONUs). The system can dynamically adjust bandwidth allocation to one or more ONUs based on the bandwidth usage, where the dynamic adjustment can include increasing bandwidth allocation to an ONU experiencing high bandwidth demand and decreasing bandwidth allocation to an ONU experiencing low bandwidth demand.

### BRIEF DESCRIPTION OF THE DRAWINGS

The foregoing and other objects, aspects, features, and advantages of the disclosure will become more apparent and better understood by referring to the following description taken in conjunction with the accompanying drawings, in which:
FIG. 1 illustrates a block diagram of embodiments of a computing device, in accordance with one or more embodiments;
FIG. 2 illustrates a block diagram depicting a computing and network environment, in accordance with one or more embodiments;
FIG. 3 illustrates a block diagram of an example system, in accordance with one or more embodiments;
FIG. 4 illustrates a block diagram of another example system, in accordance with one or more embodiments;
FIG. 5 illustrates a block diagram of another example system, in accordance with one or more embodiments;
FIG. 6 illustrates an example bandwidth map, in accordance with one or more embodiments;
FIG. 7 illustrates another example bandwidth map, in accordance with one or more embodiments;
FIGS. 8-11 illustrate example object models, in accordance with one or more embodiments; and
FIG. 12 illustrates an example flow diagram of a method for implementing network slicing in optical access networks, in accordance with one or more embodiments.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

The following IEEE standard(s), including any draft versions of such standard(s), are hereby incorporated herein by reference in their entirety and are made part of the present disclosure for all purposes: IEEE 802.11^{™}, IEEE 802.14^{™}, IEEE P802.3^{™} and IEEE Ethernet standard systems including but not limited to LRM, VSR, SR, MR, LR, ZR and KR. Although this disclosure may reference aspects of these standard(s), the disclosure is in no way limited by these standard(s).

For purposes of reading the description of the various embodiments below, the following descriptions of the sections of the specification and their respective contents may be helpful:
- Section A describes embodiments of computing and network environments that may be useful for practicing the embodiments described herein.
- Section B describes embodiments of systems and methods of implementing network slicing in optical access networks.

### A. Computing and Network Environments

Prior to discussing the specifics of embodiments of the systems and methods of the present solution, it may be helpful to discuss the computing environments in which such embodiments may be deployed.

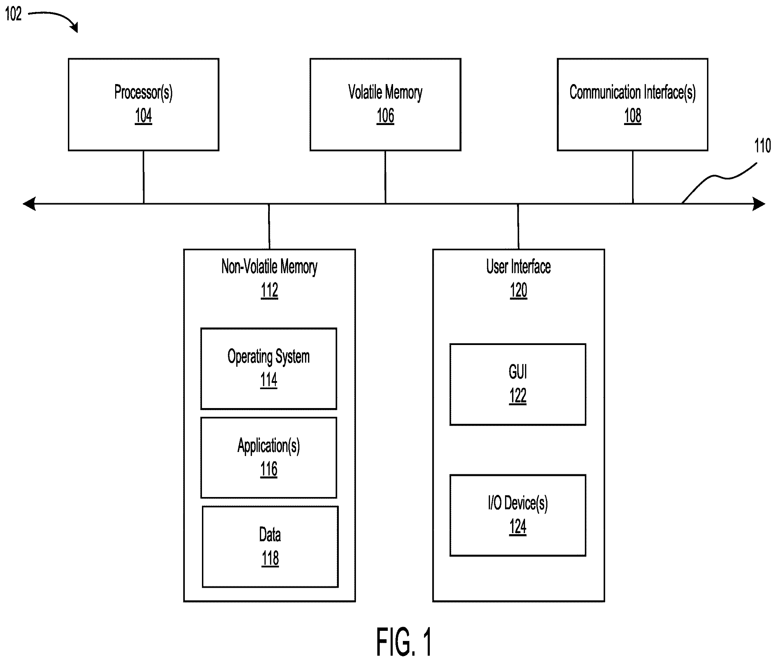

As shown in FIG. 1, a computer 102 (can also be referred to herein as a computing device 102) may include one or more processors 104, volatile memory 106 (e.g., random access memory (RAM)), non-volatile memory 112 (e.g., one or more hard disk drives (HDDs) or other magnetic or optical storage media, one or more solid state drives (SSDs) such as a flash drive or other solid state storage media, one or more hybrid magnetic and solid state drives, and/or one or more virtual storage volumes, such as a cloud storage, or a combination of such physical storage volumes and virtual storage volumes or arrays thereof), user interface (UI) 120, one or more communications interfaces 108, and communication bus 110. User interface 120 may include graphical user interface (GUI) 122 (e.g., a touchscreen, a display, etc.) and one or more input/output (I/O) devices 124 (e.g., a mouse, a keyboard, a microphone, one or more speakers, one or more cameras, one or more biometric scanners, one or more environmental sensors, one or more accelerometers, a remote control, a video game controller, or joystick, etc.). Non-volatile memory 112 stores operating system 114, one or more applications 116, and data 118 such that, for example, computer instructions of operating system 114 and/or applications 116 are executed by processor(s) 104 out of volatile memory 106. In some embodiments, volatile memory 106 may include one or more types of RAM and/or a cache memory that may offer a faster response time than a main memory. Data may be entered using an input device of GUI 122 or received from I/O device(s) 124. Various elements of computer 102 may communicate via one or more communication buses, shown as communication bus 110.

Computer 102, as shown in FIG. 1, is shown merely as an example. Clients, servers, intermediary devices, and other networking devices may be implemented by any computing or processing environment and with any type of machine or set of machines that may have suitable hardware and/or software capable of operating, as described herein. Processor(s) 104 may be implemented by one or more programmable processors to execute one or more executable instructions, such as a computer program, to perform the functions of the system. As used herein, the term "processor" describes circuitry that performs a function, an operation, or a sequence of operations. The function, operation, or sequence of operations may be hard coded into the circuitry or soft coded by way of instructions held in a memory device and executed by the circuitry. A "processor" may perform the function, operation, or sequence of operations using digital values and/or using analog signals. In some embodiments, the "processor" can be embodied in one or more application specific integrated circuits (ASICs), microprocessors, digital signal processors (DSPs), graphics processing units (GPUs), microcontrollers, field programmable gate arrays (FPGAs), programmable logic arrays (PLAs), multi-core processors, or general-purpose computers with associated memory. The "processor" may be analog, digital or mixed-signal. In some embodiments, the "processor" may be one or more physical processors or one or more "virtual" (e.g., remotely located or "cloud") processors. A processor including multiple processor cores and/or multiple processors multiple processors may provide functionality for parallel, simultaneous execution of instructions or for parallel, simultaneous execution of one instruction on more than one piece of data.

Communications interfaces 108 may include one or more interfaces to enable computer 102 to access a computer network such as a Local Area Network (LAN), a Wide Area Network (WAN), a Personal Area Network (PAN), or the Internet through a variety of wired and/or wireless or cellular connections.

In some implementations, the computing device 102 may execute an application on behalf of a user of a client computing device. For example, the computing device 102 may execute a virtual machine, which provides an execution session within which applications execute on behalf of a user or a client computing device, such as a hosted desktop session. The computing device 102 may also execute a terminal services session to provide a hosted desktop environment. The computing device 102 may provide access to a computing environment including one or more of: one or more applications, one or more desktop applications, and one or more desktop sessions in which one or more applications may execute.

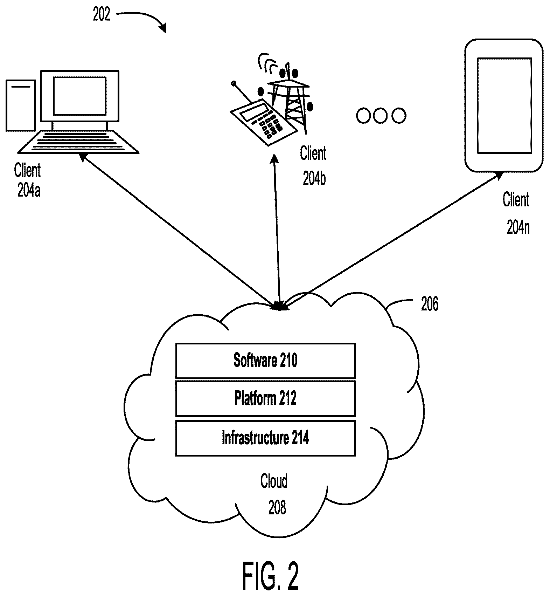

Referring to FIG. 2, a computing environment 202 is depicted. Computing environment 202 may generally be considered implemented as a cloud computing environment, an on-premises ("on-prem") computing environment, or a hybrid computing environment including one or more on-prem computing environments and one or more cloud computing environments. When implemented as a cloud computing environment, also referred as a cloud environment, cloud computing or cloud network, computing environment 202 can provide the delivery of shared services (e.g., computer services) and shared resources (e.g., computer resources) to multiple users. For example, the computing environment 202 can include an environment or system for providing or delivering access to a plurality of shared services and resources to a plurality of users through the internet. The shared resources and services can include, but are not limited to, networks, network bandwidth, servers, processing, memory, storage, applications, virtual machines, databases, software, hardware, analytics, and intelligence.

In some embodiments, the computing environment 202 may provide client 204 with one or more resources provided by a network environment. The computing environment 204 may include one or more clients 204a-204n, in communication with a cloud 208 over one or more networks 206. Clients 204 may include, e.g., thick clients, thin clients, and zero clients. The cloud 208 may include back end platforms, e.g., servers, storage, server farms or data centers. The clients 204 can be the same as or substantially similar to computer 102 of FIG. 1.

The users or clients 204 can correspond to a single organization or multiple organizations. For example, the computing environment 202 can include a private cloud serving a single organization (e.g., enterprise cloud). The computing environment 202 can include a community cloud or public cloud serving multiple organizations. In some embodiments, the computing environment 202 can include a hybrid cloud that is a combination of a public cloud and a private cloud. For example, the cloud 208 may be public, private, or hybrid. Public clouds 208 may include public servers that are maintained by third parties to the clients 204 or the owners of the clients 204. The servers may be located off-site in remote geographical locations as disclosed above or otherwise. Public clouds 208 may be connected to the servers over a public network 206. Private clouds 208 may include private servers that are physically maintained by clients 204 or owners of clients 204. Private clouds 208 may be connected to the servers over a private network 206. Hybrid clouds 208 may include both the private and public networks 206 and servers.

The cloud 208 may include back end platforms, e.g., servers, storage, server farms or data centers. For example, the cloud 208 can include or correspond to a server or system remote from one or more clients 204 to provide third party control over a pool of shared services and resources. The computing environment 202 can provide resource pooling to serve multiple users via clients 204 through a multi-tenant environment or multi-tenant model with different physical and virtual resources dynamically assigned and reassigned responsive to different demands within the respective environment. The multi-tenant environment can include a system or architecture that can provide a single instance of software, an application or a software application to serve multiple users. In some embodiments, the computing environment 202 can provide on-demand self-service to unilaterally provision computing capabilities (e.g., server time, network storage) across a network for multiple clients 204. The computing environment 202 can provide an elasticity to dynamically scale out or scale in responsive to different demands from one or more clients 204. In some embodiments, the computing environment 202 can include or provide monitoring services to monitor, control and/or generate reports corresponding to the provided shared services and resources.

In some embodiments, the computing environment 202 can include and provide different types of cloud computing services. For example, the computing environment 202 can include infrastructure as a service (IaaS). The computing environment 202 can include platform as a service (PaaS). The computing environment 202 can include serverless computing. The computing environment 202 can include software as a service (SaaS). For example, the cloud 208 may also include a cloud based delivery, e.g., software as a service (SaaS) 210, platform as a service (PaaS) 212, and infrastructure as a service (IaaS) 214. IaaS may refer to a user renting the use of infrastructure resources that are needed during a specified time period. IaaS providers may offer storage, networking, servers or virtualization resources from large pools, allowing the users to quickly scale up by accessing more resources as needed. Examples of IaaS include AMAZON WEB SERVICES provided by Amazon.com, Inc., of Seattle, Washington, RACKSPACE CLOUD provided by Rackspace US, Inc., of San Antonio, Texas, google compute engine provided by Google Inc. of Mountain View, California, or RIGHTSCALE provided by Right Scale, Inc., of Santa Barbara, California. PaaS providers may offer functionality provided by IaaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California. SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g., DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Clients 204 may access IaaS resources with one or more IaaS standards, including, e.g., Amazon Elastic Compute Cloud (EC2), Open Cloud Computing Interface (OCCI), Cloud Infrastructure Management Interface (CIMI), or OpenStack standards. Some IaaS standards may allow clients access to resources over HTTP and may use Representational State Transfer (REST) protocol or Simple Object Access Protocol (SOAP). Clients 204 may access PaaS resources with different PaaS interfaces. Some PaaS interfaces use HTTP packages, standard Java APIs, Java Mail API, Java Data Objects (JDO), Java Persistence API (JPA), Python APIs, web integration APIs for different programming languages including, e.g., Rack for Ruby, WSGI for Python, or PSGI for Perl, or other APIs that may be built on REST, HTTP, XML, or other protocols. Clients 204 may access SaaS resources through the use of web-based user interfaces, provided by a web browser (e.g., GOOGLE CHROME, Microsoft INTERNET EXPLORER, or Mozilla Firefox provided by Mozilla Foundation of Mountain View, California). Clients 204 may also access SaaS resources through smartphone or tablet applications, including, e.g., Salesforce Sales Cloud, or Google Drive app. Clients 204 may also access SaaS resources through the client operating system, including, e.g., Windows file system for DROPBOX.

In some embodiments, access to IaaS, PaaS, or SaaS resources may be authenticated. For example, a server or authentication server may authenticate a user via security certificates, HTTPS, or API keys. API keys may include various encryption standards such as, e.g., Advanced Encryption Standard (AES). Data resources may be sent over Transport Layer Security (TLS) or Secure Sockets Layer (SSL).

Although examples of communications systems described above may include devices operating according to an Ethernet and other standards, it should be understood that embodiments of the systems and methods described can operate according to alternative standards and use various wireless communication devices. For example, multiple-unit communication interfaces associated with cellular networks, satellite communications, vehicle communication networks, wired networks, and networks can utilize the systems and methods described herein without departing from the scope of the systems and methods described herein.

### B. Systems and Methods for Implementing Network Slicing in Optical Access Networks

Below are detailed descriptions of various concepts related to, and embodiments of, techniques, approaches, methods, apparatuses, and systems for implementing network slicing in optical access networks. The various concepts introduced above and discussed in greater detail below may be implemented in any of numerous ways, as the described concepts are not limited to any particular manner of implementation. Examples of specific embodiments and applications are provided primarily for illustrative purposes.

The technical solutions described herein are directed to implementing network slicing in optical access networks and addressing challenges associated with managing bandwidth and resource allocation in passive optical networks (PONs). The PON architecture can identify multiple allocation identifiers (alloc IDs) corresponding to optical network units (ONUs) within a PON. Each alloc ID can include properties, such as bandwidth demands or latency sensitivity, that facilitate the slicing process. Based on these properties, the PON architecture can establish network slices, where each slice can include a set of alloc IDs or data flows that share common characteristics. The architecture can further associate these network slices with one or more virtual network operators (VNOs) to generate a structured and efficient framework for managing network resources across diverse operators and service-level agreements (SLAs). Once the slices are defined, the PON architecture can allocate specific portions of bandwidth to each slice, such that resources are distributed according to the quality of service (QoS) demands associated with each slice.

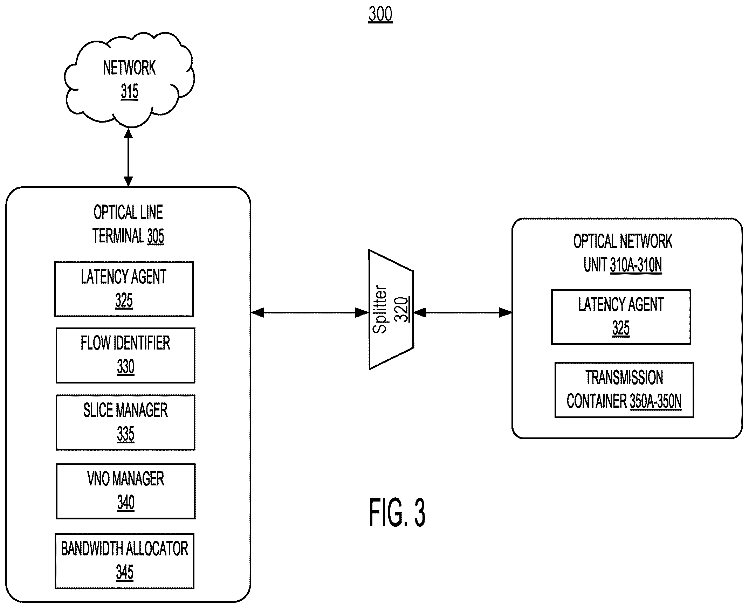

FIG. 3 illustrates an example system 300 for implementing network slicing in optical access networks, such as in a passive optical network (PON). Optical access networks are telecommunications networks that use optical fibers to deliver broadband services to end-users. A passive optical network (PON) is a type of optical access network that uses optical splitters to deliver data from a single central point to multiple end-users. This point-to-multipoint architecture allows internet service providers (ISPs) to serve numerous customers using a single optical fiber. The PONs are commonly used for the last mile connection between the ISP and residential or business subscribers, providing high-speed internet access. The PON technologies include variations such as Ethernet Passive Optical Network (EPON) and Gigabit Passive Optical Network (GPON). The EPON is a type of PON that uses Ethernet technology for data transmission. The EPON can provide a simpler and more cost-effective solution compared to GPON. The EPON is commonly used in areas with lower bandwidth demands or where cost is a primary concern. The GPON is a high-speed PON technology capable of delivering data rates up to 2.4 Gbps downstream and 1.2 Gbps upstream. The GPON can be preferred in areas with high bandwidth demands and where quality of service (QoS) is important. In some embodiments, newer technologies, such as symmetrical 10G PON (XGS-PON) and 50G PON (HSP), provide higher capacities. The principles of bandwidth allocation and slicing discussed herein, while applicable to various PON standards, can also be relevant in these high-speed networks, where the same infrastructure can be shared between multiple service providers to efficiently manage diverse service demands and high bandwidth demands.

Example system 300 can include an optical line terminal (OLT) 305 coupled with one or more optical network units (ONUs) 310A-310N (also referred to herein as ONUs 310) via one or more splitters 320. The OLT 305 can receive data streams from the internet via one or more networks 315. Any of the systems described in connection with FIGS. 1-2 can be configured, constructed, or implemented to implement, operate, and/or use any of the options and techniques described in FIG. 3.

The OLT 305 can include a device, system, or module (comprising hardware and software) that receives electrical signals from a service provider's network and converts them into optical signals for transmission over fiber optic cables. The OLT 305 can aggregate the optical signals from the ONUs 310 into a single multiplexed beam of light, which can be converted into an electrical signal. The OLT 305 can be located at the service provider's central office or exchange. The OLT 305 can be configured to terminate fiber optic cables from customer locations. The OLT 305 can manage data communication between the service provider's network and multiple ONUs 310. For example, the OLT 305 can be configured to manage upstream traffic (data sent from customer locations) and downstream traffic (data received by customer locations). The OLT 305 can be configured to operate within local and/or metropolitan area networks (MANs). In some embodiments, the OLT 305 can provide network management features such as traffic shaping and quality of service (QoS) management. The OLT 305 can be configured to manage network scalability and support additional services such as internet protocol television (IPTV) or voice over the internet (VoIP) to improve the network's capabilities.

In some embodiments, the OLT 320 can receive data streams from the service provider's core network via the network 315. The network 315, e.g., similar to the network 206 described in connection with FIG. 2, can include computer networks such as the Internet, local, wide, metro, or other area networks, intranets, satellite networks, other computer networks such as voice or data mobile phone communication networks, and combinations thereof.

The ONU 310 can include a device, system, or module (including a combination of hardware and software) that converts the optical signal received from the service provider's network (via fiber optic cable) into an electrical signal, and vice versa. The ONU 310 can provide multiple end users at a residence with access to the PON. The ONU 310 can, for example, connect to a wired Ethernet connection and provide wireless connections using radio frequency links, functioning as a wireless access point. The ONU 310 can be implemented (e.g., configured, designed, and/or built) for operating on a wireless local area network (WLAN). In some embodiments, the ONU 310 can be configured to provide routing capabilities. The ONU 310 can be implemented to support a standard for sending and receiving data using one or more radio frequencies. Those standards, and the frequencies they use, can be defined by the IEEE (e.g., IEEE 802.11 standards). The ONU 310 can be configured to support Internet hotspots and/or extend the network's Wi-Fi signal range.

The splitter 320 can include a device, system, or module that facilitates a single point-to-multi-point fiber network connection. The splitter 320 can function as a traffic hub between the OLT 305 and ONUs 310, which can be located in multiple residences. The splitter 320 can be used to aggregate or multiplex fiber optic signals to a single upstream fiber optical cable. The splitter 320 can split the power of an incoming optical signal from the OLT 305 to distribute it among various ONUs 310. The number of outputs the splitter 320 can have varies depending on its design, with common configurations such as 1x2 (one input, two outputs), 1x4 (one input, four outputs), and more for specific applications.

As shown in FIG. 3, the ONU 310 and OLT 305 can include one or more low latency agents 325. The low latency agent 325 can be the same version or different versions of the low latency agent. The low latency agent 325 can include any script, file, program, application, set of instructions, or computer-executable code that can be configured to identify, manage, or control low latency applications. With respect to latency, generally, latency can refer to an amount of time a system, application, or device takes to process and respond to a request in some embodiments. With respect to low latency, low latency can refer to such an amount of time being within a threshold, a performance level, a user experience level, the demands of the application, or usage in some embodiments. The threshold, performance level, user experience level, or demands of the application may vary based on context, such as a type of application and/or use case and the systems, networks, and computer environment for which such use cases and/or applications operate or execute. Low latency, from a perspective of a computing environment, can refer to an ability of a computing system or network to provide responses without unacceptable or unsuitable delay or otherwise minimize delay for the context or use case of which such responses are provided. System criteria and application parameters can affect a threshold for low latency. The threshold can be fixed or variable (e.g., depending upon conditions or actual needs or demands at a particular time). With respect to low latency networks and systems in the context of network and network communication, low latency can describe a computer network, systems, and environment that is designed, configured, or implemented to support applications, network traffic, and processing operations to reduce or improve latency or to satisfy a low latency threshold.

A low latency device can refer to any hardware, device component, or system that has low latency considerations or demands in some embodiments. A low latency device can be, for instance, a telecommunication device, remote control system, gaming system, audio processing device, financial trading platform, augmented reality device, and/or virtual reality device, where delays can impact user experience or system performance. A low latency application can refer to the use or performance of a low latency operation in some embodiments. A low latency device or software program can be used to perform the low latency operation (such as video conferencing, cloud gaming, augmented reality/virtual reality (AR/VR) applications, or metaverse applications).

The low latency agent 325 can include a combination of hardware and software components. The low latency agent 325 can provide localized management at the OLT 305 and/or ONU 310 level. In some embodiments, the low latency agent 325 can provide rapid identification and classification of data packets associated with low latency applications using predefined markers, protocols, and detailed packet information, such as tuples, headers, and content, among others.

The ONU 310 can include one or more transmission containers 350A-350N (sometimes referred to herein as a transmission container (T-CONT) 350). The T-CONT 350 can be a logical entity within the ONU 310 that encapsulates and carries a specific type of traffic. The T-CONT 350 can function as a virtual container for isolating and managing different data flows within the ONU 310. Each T-CONT 350 can be configured to use time slots allocated by the OLT 320 for transmitting upstream data traffic. Each T-CONT 350 can include or associate with one or more data buffers that carry a specific type of data, such as voice, video, or data services. Each T-CONT 350 can have associated data queues. A data queue can be the storage of a list of data items in a buffer or data structure, such as an ordered list of data items comprising packets. The data queue can be a linear data structure that stores a collection of data items. Each T-CONT 350 can be configured with specific QoS parameters, such as priority or bandwidth allocation. Each ONU 310 can have its own set of T-CONTs 350 for managing its traffic. In some embodiments, the ONU 310 can have its T-CONTs 350 associated with more than one slice.

Each ONU 310 can register the associated T-CONTs 350 with the OLT 305 during the initialization process or upon the creation of a new T-CONT 350. The initialization process can refer to the initial setup and configuration of the ONU 310 when it is first powered on or connected to the network. This process can involve establishing communication with the OLT 305 by discovering the OLT's presence and establishing a communication link. The ONU 310 can undergo authentication and authorization, verifying its identity with the OLT 305 and obtaining permissions to access the network. The ONU 310 can receive initial configuration parameters from the OLT 305, such as bandwidth allocation, QoS settings, and other operational parameters. The T-CONT registration can be a subsequent step where the ONU 310 informs the OLT 305 about the creation of new T-CONTs 350 or modifications to existing ones. This process can be useful for the OLT 305 to maintain an updated view of the network topology and allocate resources accordingly. During initialization, T-CONTs 350 that are preconfigured for basic operation can be registered during the initial setup process. Upon creation, new T-CONTs 350 created dynamically, such as for on-demand services, can be registered at the time of their creation. Each T-CONT 350 within the ONU 310 can be configured to facilitate bandwidth allocation to the corresponding ONU 310 connected to the OLT 305. For example, the TCONT 350 can be assigned an allocation identifier (alloc IDs) to help in identifying and addressing the ONU 310 connected to the OLT 320. An allocation identifier can be an identifier used to manage and track bandwidth allocations within a PON.

The OLT 305 can include one or more flow identifiers 330. The flow identifier 330 can be or include any script, file, program, application, set of instructions, or computer-executable code that can be configured to evaluate data flows from ONUs 310. A flow can refer to a stream of data packets transmitted upstream from an ONU 310 towards the OLT 305 over the PON. Each flow can be characterized by a set of attributes that differentiate it from other transmissions. These attributes can include, but are not limited to, the source ONU 310 and different applications or processes within that ONU 310, the network protocol used (e.g., TCP, UDP, VoIP, etc.), quality of service (QoS) demands such as bandwidth, latency, jitter, and packet loss, the type of service supported (e.g., voice, video, data), and the direction of transmission (e.g., upstream).

The flow identifier 330 can be configured to identify the characteristics of data flows. These characteristics can be defined by parameters such as fixed bandwidth, assured bandwidth, maximum bandwidth, eligibility indicators, priority, and weight, among others. The flow identifier 330 can decode or evaluate optical signals received from the ONUs 310 to identify allocation identifiers associated with each ONU 310. The flow identifier 330 can identify a plurality of allocation identifiers corresponding to a plurality of ONUs 310 in the PON, with each allocation identifier having one or more properties. These properties can include bandwidth demands (the data rate required by the ONU), latency sensitivity (the tolerance for delay in data transmission), priority level (the relative importance of the ONU's traffic), and service type (the type of service provided to the ONU, such as voice, data, or video).

The flow identifier 330 can associate one or more allocation identifiers (alloc IDs) with specific data streams or upstream service flows transmitted by each ONU 310 within the PON. The T-CONTs 350, which act as buffers for transmitting the upstream service flows, can be identified by their corresponding alloc IDs. For example, alloc IDs can function as identifiers for specific allocations of network resources, such as bandwidth or time slots, assigned to particular ONUs 310 or T-CONTs 350. The flow identifier 330 can utilize alloc IDs as reference points for managing traffic and resource allocation for each ONU 310. For example, the flow identifier 330 can map alloc IDs to their respective data streams to facilitate tracking and effective management of upstream data transmission.

The OLT 305 can include one or more slice managers 335. The slice manager 335 can be or include any script, file, program, application, set of instructions, or computer-executable code that can be configured to manage network slices within the PON. The slice manager 335 can associate specific quality of service (QoS) parameters with each slice to satisfy the service demands of various applications or end-users. These parameters can include bandwidth limits, priority levels, or scheduling algorithms to enhance resource allocation and network performance. The slice manager 335 can group similar data flows into network slices. For example, the slice manager 335 can generate, configure, or establish multiple virtual network partitions, known as slices. A slice can be a segment of a network that can be logically separated, managed, or isolated from other segments. A segment can refer to a defined portion of the network separated or distinguished based on logical, functional, or physical attributes. A slice can provide a logical grouping or selection of one or more network resources (e.g., bandwidth, routing paths, or computational resources) configured to satisfy service level demands or quality of service (QoS) parameters. For example, a slice can provide a virtual network environment that satisfies the demands of specific services or applications. Each slice can operate as a separate virtual network within the larger physical network infrastructure. Each slice can include a set of allocation identifiers corresponding to data flows that share common properties, such as bandwidth demands, latency sensitivity, or priority levels, among others. The common properties can refer to shared characteristics or attributes that are similar across different slices or data flows. For example, data flows with similar bandwidth demands can be grouped together in a slice to receive the appropriate amount of bandwidth.

In some embodiments, the OLT 305, via the slice manager 335, can manage one or more slices using predefined objects, with each object specifying attributes and relationships for a corresponding slice or an allocation identifier. In this regard, the PON_SLICE object can specify a slice, which can be a collection of one or more allocation identifiers or flows. The PON_SLICE object can include various attributes, such as a slice ID, an optional description (e.g., golden slice, low latency slice, etc.), association with a PON interface, guaranteed and maximum bandwidth, priority, weight for best-effort bandwidth assignment, and a split threshold to control latency and jitter. The PON_SLICE object can also support statistical tracking for each slice across bandwidth eligibility classes. Each slice can be associated with multiple allocation identifiers. The slices can be shared among multiple VNOs or dedicated to a single VNO. Additionally, the ITUPON_ALLOC object can specify an allocation identifier and its association with slices. For example, the ITUPON_ALLOC object can include attributes, such as slice ID, to indicate the association of the allocation identifier with a slice, with 0 indicating the NULL slice.

In some embodiments, the slice manager 335 can associate each allocation identifier with one or more slices, such that the corresponding data stream can be mapped to the appropriate slice. Each slice can be configured with descriptor parameters, including fixed bandwidth (a guaranteed minimum allocation), assured bandwidth (bandwidth typically available but adjustable during congestion), maximum bandwidth (the upper limit of bandwidth for the slice), eligibility indicators (defining eligibility for additional bandwidth), and priority settings (establishing the slice's relative importance). Based on these parameters, the slice manager 335 can facilitate efficient traffic management and improve resource utilization across the network.

The OLT 305 can include one or more VNO managers 340. The VNO manager 340 can be or include any script, file, program, application, set of instructions, or computer-executable code that can be configured to manage VNOs within the PON architecture, such as the network slicing framework. The VNO manager 340 can associate slices with VNOs, such that each VNO receives the appropriate level of service based on predefined service levels. These service levels, such as golden, silver, and bronze, can be characterized or defined based on specific priorities or bandwidth guarantees. A guaranteed bandwidth can refer to a specific amount of network bandwidth that is reserved or assured for a particular service or application. For example, the golden slice can provide high priority or high guaranteed bandwidth for low latency services such as online gaming or virtual reality. The silver slice can provide moderate priority and bandwidth for services such as IPTV or video streaming, and the bronze slice can deliver low priority and best-effort bandwidth for less critical services such as internet browsing. The best-effort bandwidth can refer to a type of network service where the PON architecture may not guarantee any specific level of performance or quality. Instead, the PON architecture makes a best effort to deliver data packets as quickly and efficiently as possible, but without any assurances regarding speed, latency, or reliability.

In some embodiments, the OLT 305, via the VNO manager 340, can manage one or more VNOs using predefined objects, with each object specifying attributes and relationships for a corresponding VNO. In this regard, the VNO object can specify a VNO and define attributes such as a VNO ID, an optional description, and parameters for guaranteed and maximum bandwidth. Each VNO can be associated with multiple slices, and the sum of bandwidth, such as the guaranteed bandwidth, for all allocation identifiers within a VNO cannot exceed the VNO's preconfigured guaranteed bandwidth. For example, if a VNO has a preconfigured guaranteed bandwidth of 100 Mbps, the sum of the guaranteed bandwidths for all its alloc IDs may not exceed 100 Mbps. Additionally, the ITUPON_ALLOC object can specify an allocation identifier and its association with VNOs. The ITUPON_ALLOC object can include attributes, such as slice ID (indicating the association of the allocation identifier with a slice, with 0 indicating the NULL slice) and the VNO ID (optional, with 65535 indicating no VNO association). Each allocation identifier is to adhere to the bandwidth and priority parameters of its associated slice and may not belong to more than one slice or VNO. For example, if alloc ID 1 is associated with VNO 1 and/or slice 1, the alloc ID 1 may not be simultaneously associated with VNO 2 or slice 2, such that the bandwidth and priority parameters for alloc ID 1 are consistently applied according to the agreements with VNO 1 and the specifications of slice 1.

Each slice can have defined properties, including guaranteed bandwidth, maximum bandwidth, priority, or weight for best-effort bandwidth assignment. The VNO manager 340 can assign one or more VNOs to each slice based on their service demands. The VNO manager 340 can implement flexible resource allocation where a VNO can be associated with multiple slices or multiple VNOs can be associated with the same slice, such that multiple VNOs can share the bandwidth and resources allocated to that slice. Within each slice, the VNO manager 340 can configure allocation identifiers to specify specific bandwidth allocations for VNOs. The VNO manager 340 can verify that the total bandwidth assigned to the allocation identifiers within a VNO does not exceed the VNO's preconfigured or predefined bandwidth, such as the guaranteed bandwidth. The VNO manager 340 can dynamically adapt slice configurations based on current network conditions or data flow characteristics. The VNO manager 340 can modify slice properties, such as allocation identifiers and service mappings, to align with changing demands. For example, the VNO manager 340 can adjust the allocation identifiers associated with each slice to facilitate bandwidth or resource reallocations based on demands of the network.

The OLT 305 can include one or more dynamic bandwidth allocators 345. The dynamic bandwidth allocator 345 can be or include any script, file, program, application, set of instructions, or computer-executable code that can be configured to dynamically manage and adjust the available bandwidth within the PON architecture. The dynamic bandwidth allocator 345 can determine how bandwidth is being utilized by different devices (e.g., ONUs 310) connected to the OLT 305. Based on the evaluation, the dynamic bandwidth allocator 345 can monitor network traffic and allocate bandwidth to the ONUs 310 to prevent congestion. The dynamic bandwidth allocator 345 can use predefined configuration parameters, such as QoS demands, to allocate the bandwidth for each network slice to meet the respective performance demands. These QoS parameters can be particularly important for low latency applications, such as online gaming, virtual reality, and IPTV, which desire configured bandwidth allocation based on latency characteristics to satisfy their performance demands.

In some embodiments, the OLT 305, via the dynamic bandwidth allocator 345, can manage or allocate bandwidth to one or more VNOs using predefined objects. Each predefined object can specify attributes and relationships for a corresponding VNO, facilitating efficient management and allocation of resources. In this regard, the PON_INTERFACE object can indicate the PON interface and its configuration for bandwidth assignment, defining methods for additional bandwidth allocation at the allocation identifier and slice levels. The dynamic bandwidth allocator 345 can implement rate-proportional allocation, where additional bandwidth is distributed based on usage rates of the slices, or priority-weight methods, where bandwidth is allocated based on priority levels or weights assigned to each slice. For example, slices associated with higher priority levels can receive bandwidth first, or the weight assigned to a slice can determine its proportionate share of the additional bandwidth. The additional bandwidth can refer to the extra bandwidth that can be allocated to slices beyond their guaranteed or assured bandwidth for improving network performance or providing resources to satisfy the demands of the high priority services.

The dynamic bandwidth allocator 345 can generate and maintain a bandwidth (BW) map. A bandwidth map can refer to a visual representation that illustrates the distribution and availability of network bandwidth across different segments or components. The BW map can function as a dynamical schedule that specifies upstream bandwidth allocation for each connected ONU 310. For example, based on the BW map, the dynamic bandwidth allocator 345 can assign specific time slots and frame structures to each T-CONT for transmitting data frames upstream to the OLT 305, using the alloc IDs associated with each T-CONT 350. Each ONU 310 can be configured to transmit its data frames upstream during its assigned time slots, according to the BW map. The dynamic bandwidth allocator 345 can be configured to assign an allocation identifier to each connected ONU 310. The allocation identifier can allow the OLT 305 to identify specific ONUs 310 when communicating with individual ONUs 310 for control or configuration purposes. The dynamic bandwidth allocator 345 can dynamically allocate bandwidth to each T-CONT 350 based on its alloc ID, which identifies or specifies the bandwidth allocation for that T-CONT 350 within the ONU 310.

The dynamic bandwidth allocator 345 can allocate bandwidth to each slice based on its QoS demands and available resources. The dynamic bandwidth allocator 345 can allocate a portion of bandwidth to each of the one or more slices associated with a VNO and can update the bandwidth dynamically based on a rate proportion or a priority level associated with each slice. The dynamic bandwidth allocator 345 can monitor network traffic continuously and can adjust bandwidth allocations in real time or near real-time to improve network performance. In some embodiments, the dynamic bandwidth allocator 345 can allocate bandwidth using a rate-proportional method, where additional bandwidth is distributed among slices in proportion to their respective rates. For example, if slice 1 requires 40% of the total bandwidth and slice 2 requires 60%, the dynamic bandwidth allocator 345 can allocate additional bandwidth in the same proportion. In some embodiments, the dynamic bandwidth allocator 345 can use a priority-based method, where slices with higher priority levels are allocated bandwidth first. For example, if slice 1 has a higher priority than slice 2, the dynamic bandwidth allocator 345 can allocate additional bandwidth to slice 1 before allocating any remaining bandwidth to slice 2.

The dynamic bandwidth allocator 345 can allocate bandwidth to each ONU 310 based on the QoS demands of the traffic/services or available resources. The dynamic bandwidth allocator 345 can monitor network traffic on a PON to determine bandwidth usage for each of the ONUs 310. In some embodiments, the dynamic bandwidth allocator 345 can allocate a portion of bandwidth to each ONU 310 based on the services provided to subscribers associated with one or more VNOs. The dynamic bandwidth allocator 345 can update the bandwidth dynamically based on a rate proportion or a priority level associated with the traffic of each ONU 310. The dynamic bandwidth allocator 345 can monitor network traffic continuously and adjust bandwidth allocations (e.g., upstream bandwidth allocations) in real-time or near real-time to improve network performance. In some embodiments, the dynamic bandwidth allocator 345 can allocate bandwidth using a rate-proportional method, where additional bandwidth is distributed among ONUs 310 in proportion to their respective rates. For example, if ONU 1 demands 40% of the total bandwidth and ONU 2 demands 60%, the dynamic bandwidth allocator 345 can allocate additional bandwidth in the same proportion. In some embodiments, the dynamic bandwidth allocator 345 can use a priority-based method, where ONUs 310 with higher priority levels are allocated bandwidth first. For example, if ONU 1 has a higher priority than ONU 2, the dynamic bandwidth allocator 345 can allocate additional bandwidth to ONU 1 before allocating any remaining bandwidth to ONU 2. In some embodiments, the dynamic adjustment can include increasing bandwidth allocation to an ONU 310 experiencing high bandwidth demand and decreasing bandwidth allocation to an ONU 310 experiencing low bandwidth demand.

The dynamic bandwidth allocator 345 can classify slices into various service types based on service demands. For a bronze slice, configured for basic Ethernet services with low bandwidth demands and relaxed latency or jitter constraints, the dynamic bandwidth allocator 345 can allocate a minimum amount of bandwidth to maintain basic connectivity. For a silver slice, designed for low-interaction services such as web browsing and email, the dynamic bandwidth allocator 345 can allocate moderate bandwidth with improved latency and jitter performance. For a golden slice, reserved for high-interaction services such as video conferencing, online gaming, and virtual reality, the dynamic bandwidth allocator 345 can allocate significant bandwidth to satisfy the high demands for low latency, low jitter, and high throughput, prioritizing it over other slices.

In some embodiments, the dynamic bandwidth allocator 345 can update the bandwidth of the set of allocation identifiers (alloc IDs) within a corresponding slice based on a rate proportion or a priority level associated with each alloc ID (or alloc). For example, the dynamic bandwidth allocator 345 can distribute additional bandwidth using a rate-proportional method, where each alloc ID receives a portion of the additional bandwidth proportional to its rate. For example, if alloc A requires 30% of the total bandwidth and alloc B requires 70%, the dynamic bandwidth allocator 345 can allocate additional bandwidth in the same proportion, providing 30% to alloc A and 70% to alloc B. In some embodiments, the dynamic bandwidth allocator 345 can allocate bandwidth using a priority-based method, where alloc IDs with higher priority levels are given bandwidth first. For example, if alloc A has a higher priority than alloc B, the dynamic bandwidth allocator 345 can allocate additional bandwidth to alloc A before satisfying the demands of alloc B.

The dynamic bandwidth allocator 345 can provide proportional and efficient distribution of bandwidth across slices by interleaving bandwidth allocations for slices associated with different virtual network operators (VNOs) within the BW map. The dynamic bandwidth allocator 345 can adapt to varying service-level agreements (SLAs) by reallocating unused guaranteed bandwidth from one VNO to other VNOs. For example, the dynamic bandwidth allocator 345 can, by default, allow excess bandwidth from one VNO to be utilized by other VNOs within the PON if the VNO does not use its entire guaranteed bandwidth. For instance, if VNO 1 has a guaranteed bandwidth of 100 Mbps but is using 70 Mbps, and VNO 2 has a guaranteed bandwidth of 50 Mbps but needs 80 Mbps due to high demand, the dynamic bandwidth allocator can reallocate the 30 Mbps of unused bandwidth from VNO 1 to VNO 2 to address the increased demand. In some embodiments, the dynamic bandwidth allocator 345 can allow users (e.g., network administrators or operators) to configure this behavior to allow or prevent the reallocation of unused bandwidth.

In some embodiments, the dynamic bandwidth allocator 345 can combine traffic flows from different slices onto shared network resources by interleaving slices associated with one or more VNOs. During the provisioning stage, the dynamic bandwidth allocator 345 can configure allocation identifiers with specific slice IDs and VNO IDs. The dynamic bandwidth allocator 345 can configure slice parameters, including guaranteed bandwidth, maximum bandwidth, priority, and weight, to maintain efficient resource allocation. The dynamic bandwidth allocator 345 can continuously monitor traffic flows and dynamically adjust bandwidth allocations for each slice in real-time or near real-time, based on current network conditions or slice demands. The dynamic bandwidth allocator 345 can implement interleaving by alternating segments of bandwidth assigned to each slice. For example, if two VNOs have slices desiring high priority bandwidth for latency sensitive services, such as online gaming, the dynamic bandwidth allocator 345 can allocate bandwidth in smaller, evenly distributed segments across multiple frames. Instead of assigning large contiguous blocks of bandwidth to each slice, the dynamic bandwidth allocator 345 can interleave the allocation of bandwidth bursts for high priority slices, such that each VNO's high priority slice gets bandwidth more frequently. This alternating allocation across frames allows latency sensitive services to receive consistent and timely bursts of bandwidth, maintaining low latency QoS demands and improving resource utilization across the shared PON infrastructure.

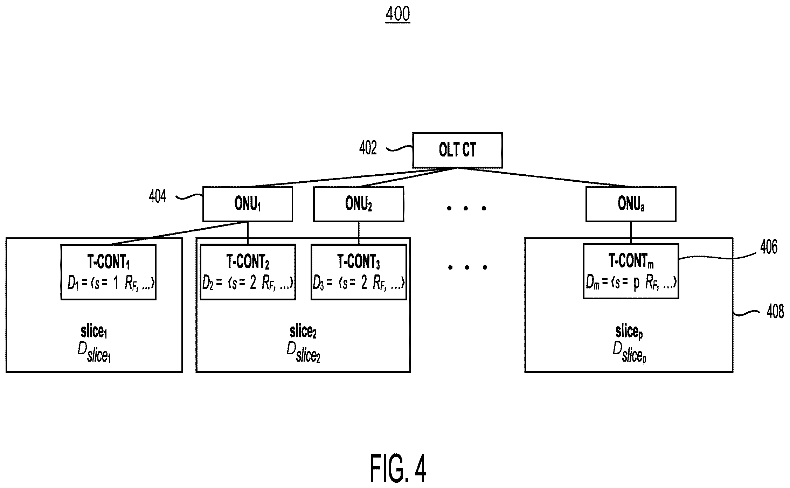

FIG. 4 illustrates an example system 400 depicting a slice-aware dynamic bandwidth allocation (DBA) architecture. As shown, the system 400 can include one or more components to enhance traffic management and resource utilization for network slices in a PON architecture. Various components of the system 400 shown in FIG. 4 may be similar to, and include any of the structure and functionality of, the system 300 of FIG. 3. The OLT 402 can function as a central control point in the DBA architecture 400. The OLT 402 can monitor traffic and classify incoming data flows. The OLT 402 can dynamically manage bandwidth across slices 408. The OLT 402 can divide the network into logical slices, each defined by specific quality of service (QoS) parameters, to facilitate the efficient management of shared resources. The ONUs 404 can be endpoint devices connected to the OLT 402 via optical fibers. Each ONU 404 can be associated with one or more T-CONTs, 406, which indicate logical groupings of data flows. Each T-CONT 406 can belong to one slice 408, and there can be a one-to-one relationship between a T-CONT 406 and its respective slice 408. For example, as shown, the ONU1 404 is associated with multiple T-CONTs 406, with each T-CONT 406 belonging to a specific slice 408. For example, T-CONT1 406 is associated with slice1 408, and T-CONT2 406 and T-CONT3 406 are associated with slice2 408, such that each T-CONT 406 can belong to one slice 408.

A slice 408 can be a logical grouping of T-CONTs 406 that share common QoS demands. Each slice 408 can be characterized by a slice descriptor (Dslice), which can include parameters such as, fixed Bandwidth (e.g., the guaranteed minimum bandwidth allocation for the slice), assured Bandwidth (e.g., the bandwidth available under normal conditions, adjustable during congestion), maximum bandwidth (e.g., the upper bandwidth limit that can be allocated to the slice), eligibility indicator (e.g., a ternary indicator that determines whether a slice is eligible for additional bandwidth beyond its assured allocation, such as none, non-assured (NA), or best-effort (BE)), priority (e.g., the priority level for the slice, used during congestion for best-effort bandwidth assignment, weight (e.g., the weight assigned to the slice for determining resource distribution in best-effort bandwidth allocation).

The OLT 402 can classify incoming traffic flows based on their QoS demands and associate them with appropriate slices 408. The OLT 402 can allocate bandwidth to each slice 408 based on its QoS parameters and the availability of network resources. The OLT 402 can interleave or schedule traffic transmission from slices 408 onto shared network resources. The interleaving process can utilize the slice descriptors to manage resource allocation and traffic scheduling. Additionally, the OLT 402 can dynamically adjust bandwidth allocations in real-time or near real-time, adapting to changing network conditions and maintaining enhanced performance for latency-sensitive applications such as online gaming and virtual reality.

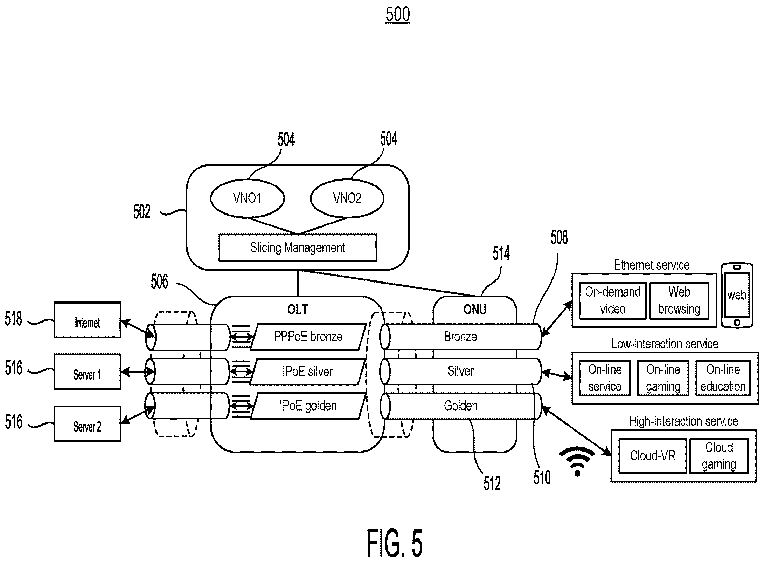

FIG. 5 illustrates an example system 500 depicting a PON slicing architecture for a multi-service level agreement (multi-SLA) framework. As shown, the system 500 can facilitate the slicing of network resources to satisfy the diverse QoS demands of VNOs and various service categories. Various components of the system 500 shown in FIG. 5 may be similar to, and include any of the structure and functionality of, the systems 300 and 400 of FIGS. 3-4. The PON slicing architecture can include a slicing management 502 for coordinating the network slicing. The slicing management 502 can generate, manage, or allocate network slices to VNOs 504, such that the allocated slices satisfy the specific SLAs for each operator. A service-level agreement (SLA) can refer to a set of performance and operational metrics that define the QoS expectations and demands for a VNO. These metrics can include parameters such as guaranteed bandwidth, latency thresholds, packet loss rates, or uptime reliability, which are agreed upon between the network provider and the VNO. The VNOs 504, such as VNO1 504 and VNO2 504, can correspond to independent operators or service providers that share the PON infrastructure. Each VNO 504 can be associated with one or more slices based on its service demands. In some embodiments, a VNO 504 may not carry slice properties such as latency or bandwidth, and these properties can be defined by the slices associated with the VNO 504. During provisioning, the slicing management 502 can configure allocation identifiers such that the sum of the guaranteed bandwidth for all allocation identifiers within the VNO 504 does not exceed the VNO's preconfigured bandwidth, such as the guaranteed bandwidth.

The OLT 506 within the PON slicing architecture can function as a central controller. For example, the OLT 506 can manage the distribution of bandwidth across multiple slices and implement SLA parameters. The OLT 506 can allocate slices with one or more service levels, such as bronze 508, silver 510, and golden 512, each indicating a service level with specific QoS parameters. For example, the bronze slices 508 can provide Ethernet services, such as on-demand video and web browsing, with relaxed latency and jitter constraints. The silver slices 510 can be configured for low-interaction services, such as online gaming, online education, and general online services, desiring moderate bandwidth and improved latency performance. The golden slices 512 can be used for high-interaction services, such as cloud-based virtual reality (Cloud-VR) and cloud gaming, desiring high bandwidth, low latency, or minimized jitter.

The PON slicing architecture 500 can facilitate flexible associations between VNOs and slices. For example, a single VNO 504 can be associated with multiple slices to satisfy diverse service demands. Additionally, multiple VNOs 504 can share the same slice to enhance resource utilization and reduce network complexity. In some embodiments, if one or more VNOs 504, such as VNO1 504 and VNO2 504, desire service levels associated with golden, silver, and bronze slices, the slicing management 502 can support various configurations. In one configuration, each VNO 504 can have its own set of slices. For instance, VNO1 can have its own set of golden, silver, and bronze slices, and VNO2 can have its own set of golden, silver, and bronze slices. In another example, multiple VNOs 504 can use shared/global slices. For instance, a single set of golden, silver, and bronze slices can be used by both VNO1 and VNO2. The slicing management 502 can accommodate compliance with diverse network configurations while maintaining the integrity of SLA demands. In some embodiments, if a VNO 504 does not use its entire guaranteed bandwidth, the slicing management 502 can allocate the excess bandwidth to other VNOs 504 on the PON slicing architecture. This behavior is the default, but may be configurable (e.g., the user can choose to avoid this reallocation).

The ONUs 514 within the PON slicing architecture 500 are network devices that can be configured to connect end-user devices to the OLT 506. Each ONU 514 can support multiple T-CONTs, which can be associated with slices. Each T-CONT within the ONU 514 can be associated with a corresponding allocation identifier. The OLT 506 can classify the incoming traffic from the T-CONTS based on QoS demands or allocation identifiers and associates or maps the classified traffic with specific slices that are configured to satisfy the respective QoS demands. The slices can be configured with different QoS parameters, such as bandwidth, latency, and jitter. For example, traffic from servers 516 and the internet 518 can be classified into slices for Ethernet services, low-interaction services, and high-interaction services, based on their QoS demands. The OLT 506 can schedule the transmission of traffic from different slices onto the shared network resources, such that each slice can receive the appropriate level of bandwidth and prioritization.

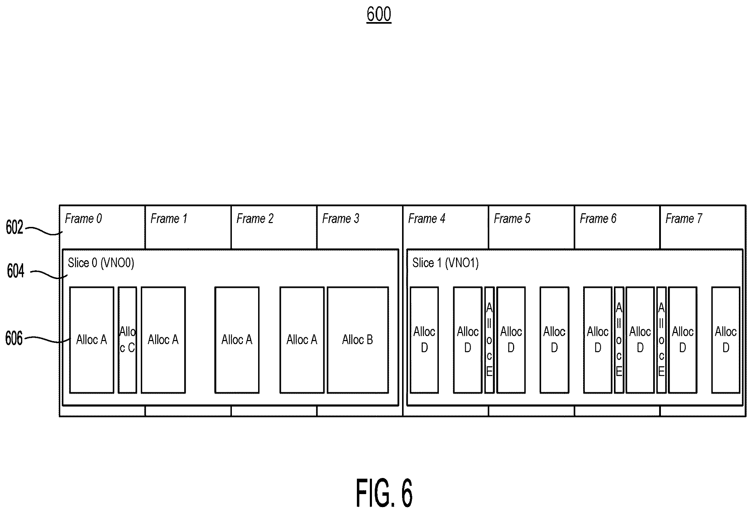

FIG. 6 illustrates an example bandwidth (BW) map 600 in a multi-slice PON environment. The BW map 600 can provide a representation of how bandwidth is allocated to different slices and their associated allocation identifiers (alloc IDs or alloc) within a PON environment. For example, alloc IDs can function as identifiers for specific allocations of network resources, such as bandwidth or time slots, assigned to particular ONUs or traffic containers (T-CONTs). The alloc IDs can be associated with various traffic flows, which specify streams of network data, such as voice, data, or video. An alloc ID may reference a traffic flow, and vice versa, depending on the implementation. For example, in a one-to-one mapping, a single alloc ID can be associated with a specific traffic flow. In a one-to-many mapping, multiple traffic flows can share a single Alloc ID. In a many-to-one mapping, a single traffic flow can be split across multiple alloc IDs.

The BW map 600 can dynamically allocate bandwidth across multiple physical (PHY) frames 602 for one or more slices 604. Each frame 602 can specify a specific time slot or duration within which data is transmitted. The slices 604 can be logical partitions of the network, each with its own set of QoS parameters. Each slice 604 can be associated with one or more VNOs. For example, slice 0 can be associated with VNO 0, and slice 1 can be associated with VNO 1. Additionally, slice 0 can include allocation IDs (allocs) 606 such as alloc A and alloc C. Similarly, the slice 1 can include allocs 606, such as alloc D and alloc E. The alloc A of VNO 0 and the alloc D of VNO 1 can be treated as golden services with respect to latency. For example, the alloc A of VNO 0 and the alloc D of VNO 1 can desire low latency for time-sensitive traffic. As shown, the BW map 600 extends across eight PHY frames 602 (e.g., frame 0 to frame 7), with bandwidth allocated dynamically based on QoS demands and SLAs constraints. For example, during frames 0 through 3, slice 0 is allocated bandwidth for alloc A, providing frequent bursts of bandwidth to satisfy its low latency demands. Alloc C receives bandwidth in frame 0 due to its association with a lower priority service or non-latency-sensitive traffic. However, after frame 3, slice 0 is no longer allocated bandwidth, and slice 1 takes over the bandwidth resources. As seen, alloc D in slice 1 begins receiving frequent bandwidth allocations starting from frame 4 to satisfy its low latency demands, and alloc E shares the bandwidth in frames 5, 6, and 7 for its associated traffic.

In some embodiments, the illustrated allocation pattern can cause a technical challenge with resource availability for golden services, for example, in maintaining consistent performance for high priority services, particularly during periods of peak demand. For example, alloc A and alloc D experience periods of high bandwidth allocation followed by periods of low or no allocation. As shown, alloc A in VNO 0 receives frequent bandwidth bursts during the first four frames 602 but is deprived of bandwidth in subsequent frames 602, leaving alloc A unable to maintain consistent low latency performance throughout the BW map. Similarly, alloc D receives bandwidth only during the latter half of the BW map 600 (e.g., frames 4 to 7). In some embodiments, the BW map 600 can maintain compliance with SLA constraints by limiting each VNO to 50% of the PON capacity. However, the static separation of bandwidth across slices 604 and frames 602 can cause inefficiencies in satisfying the continuous low latency demands of golden services.

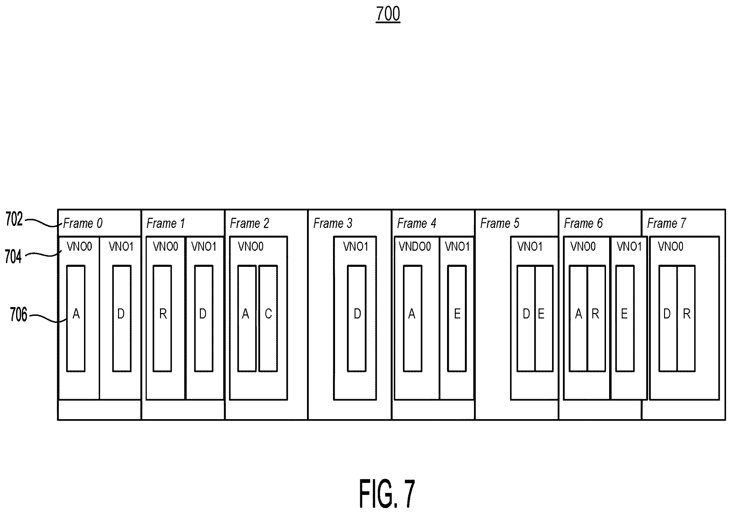

FIG. 7 illustrates an example bandwidth (BW) map 700 corresponding to a slice-aware BW map in a multi-slice PON environment. The slice-aware BW map can provide an evenly distributed allocation of multiple physical (PHY) frames 702 within a 1 ms allocation period. The BW map 700 can extend across eight PHY frames 702 (e.g., frame 0 to frame 7), indicating specific time intervals for bandwidth allocation. The BW map 700 can allocate time slots to different alloc IDs (or alloc) 706 within each slice. Within each frame 702, the BW map 700 can allocate time slots to different alloc IDs 706 based on the associated slices and their respective QoS demands. As described herein, one or more VNOs 704 can be associated with slices. For example, VNO 0 associated with slice 0 can include alloc A, and VNO1 associated with slice 1 can include alloc D. Alloc A and alloc D can be identified as high priority allocations that may desire consistent bandwidth bursts to satisfy low latency or high reliability services. The BW map 700 can evenly distribute the bandwidth bursts of each alloc ID 706 across the eight PHY frames, such that the high priority allocations, such as alloc A and alloc D, receive a fair and balanced share of bandwidth across the entire 1ms allocation period. For example, alloc A in VNO 0 is allocated bandwidth in frames 0, 2, 4, and 6. Similarly, alloc D in VNO 1 is allocated bandwidth in frames 0, 1, 3, 5, and 7. The distribution pattern spreads the bandwidth bursts evenly across the eight PHY frames 702, providing a balanced allocation for slices while minimizing contention for network resources. This evenly distributed allocation pattern can minimize latency and jitter for time-sensitive traffic associated with alloc A or alloc D. The specific allocation pattern may vary depending on the QoS demands of different alloc IDs 706 and the overall network traffic load.

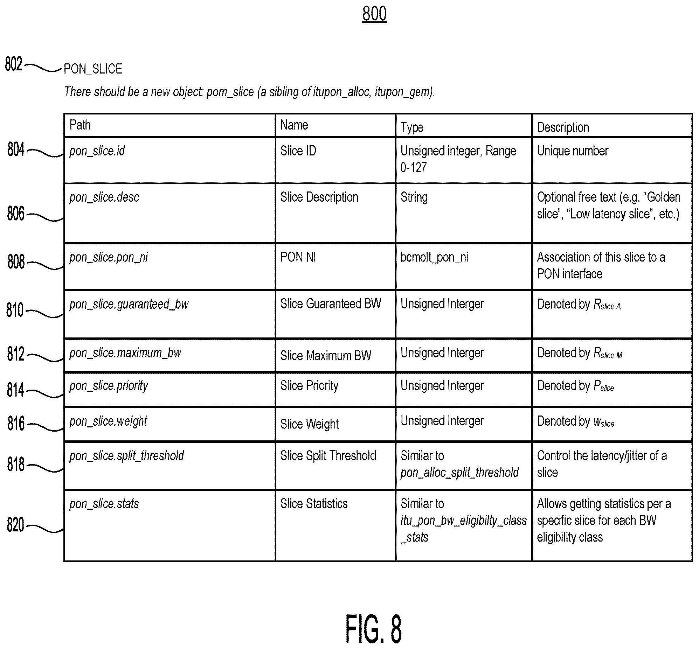

FIG. 8 illustrates an example object model 800 for defining the structure and attributes of a PON slice within a PON architecture corresponding to a slicing framework. The object model 800 can define an object, referred to herein as a pon_slice object 802. The pon_slice object 802 can be a sibling of other PON objects, such as itupon_alloc and itupon_gem. The pon_slice object 802 can specify attributes and relationships for managing slices in the PON. For example, the pon_slice object 802 can specify a pon_slice.id 804, a pon_slice.desc 806, a pon_slice.pon_ni 808, a pon_slice.guaranteed_bw 810, a pon_slice.maximum_bw 812, a pon_slice.priority 814, a pon_slice.weight 816, a pon_slice.split_threshold 818, and a pon_slice.stats 820.

The pon_slice.id 804 can specify the slice ID, which can be an unsigned integer ranging from 0 to 127. The pon_slice.id 804 can be used to identify a corresponding slice. The pon_slice.desc 806 can provide an optional slice description in free-text format, allowing annotations such as "Golden slice" or "Low latency slice". The pon_slice.pon_ni 808 can associate the slice with a specific PON interface to facilitate the integration of the respective slice into the PON infrastructure.

The pon_slice.guaranteed_bw 810 and pon_slice.maximum_bw 812 can define the guaranteed and maximum bandwidth for the slice, respectively. These parameters can be used to maintain the operations of a slice within its bandwidth allocation limits. The pon_slice.guaranteed_bw 810 is not merely the sum of all guaranteed bandwidths of allocation identifiers (e.g., allocs) associated with the slice but can also include the fixed portion of the bandwidth and the assured portion of the bandwidth. In some embodiments, where no allocs are associated with the slice, the pon_slice.guaranteed_bw 810 can still reserve a guaranteed bandwidth for the slice. Similarly, the pon_slice.maximum_bw 812 is not simply the maximum value among all maximum bandwidths of allocs associated with the slice but also aligns with the overall constraints and configurations of a network slice to facilitate efficient resource management and adherence to QoS demands. In some embodiments, the PON architecture can support a limited number of slices per PON, such as 16 slices. In this regard, the "NULL" slice (e.g., slice 0) can exist from the beginning and remain visible and configurable through APIs. If a user chooses to operate in a legacy mode (non-slice-aware DBA), the alloc association with the "NULL" slice (itupon_alloc.slice_id = 0) can generate the same behavior as in the legacy configuration. In some embodiments, a slice may not have a defined active or inactive state. The slice can be considered active when at least one alloc is associated with the slice. In some embodiments, users may not be able to configure or clear a slice that is already associated with allocs to maintain the PON architecture integrity and prevent conflicts in resource allocation.

The pon_slice.priority 814 can define the priority of the slice, and the pon_slice.weight 816 can determine its weight for best-effort bandwidth allocation. To manage latency and jitter, the pon_slice.split_threshold 818 can control the slice's split threshold. The pon_slice.stats 820 can allow the retrieval of slice statistics to facilitate monitoring and analysis of the slice's performance for each bandwidth eligibility class.

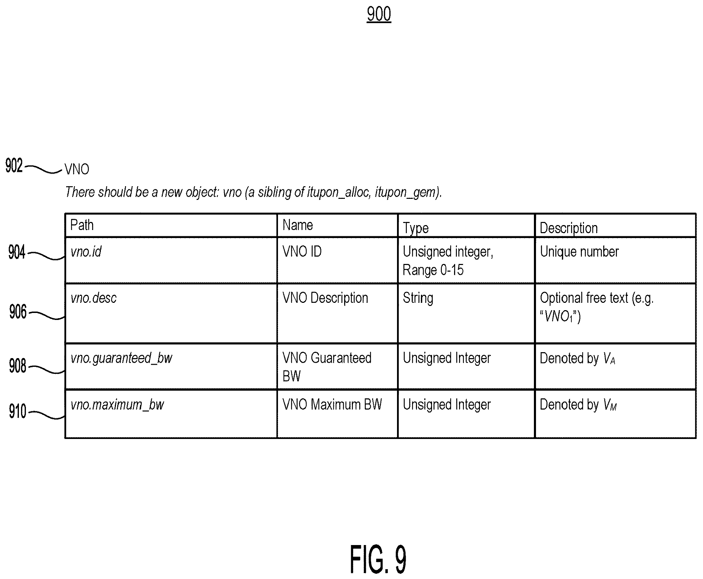

FIG. 9 illustrates an example object model 900 for defining the structure and attributes of a virtual network operator (VNO) within a PON architecture corresponding to a slicing framework. The object model 900 can define an object, referred to herein as a VNO object 902. The VNO object 902 can be a sibling of other PON objects, such as itupon_alloc and itupon_gem. The VNO object 902 can include attributes that allow for the configuration and management of VNOs to support diverse quality of service (QoS) demands and bandwidth allocations. The VNO object 902 can specify attributes, such as vno.id 904, vno.desc 906, vno.guaranteed_bw 908, and vno.maximum_bw 910.

The vno.id 904 can specify an identifier for each VNO. The vno.id 904 can define an unsigned integer within the range of 0 to 15. The identifier can be used to distinguish one or more VNOs operating within the PON infrastructure. The vno.desc 906 can provide an optional description for the VNO in the form of free text (e.g., "VNO1"). The vno.desc 906 can allow users to add context or labeling for identification. The vno.guaranteed_bw 908 can specify the guaranteed bandwidth allocated to the VNO. The vno.guaranteed_bw 908 can be defined as the sum of all guaranteed bandwidths of the allocation identifiers (allocs) associated with the VNO. The vno.guaranteed_bw 908 can specify a reserved portion of bandwidth to the VNO to satisfy its minimum service level demands. For example, the guaranteed bandwidth can include the fixed portion (e.g., a set amount of bandwidth that is always available to a slice or service) and the assured portion (e.g., additional bandwidth that is guaranteed to be available under normal operating conditions). The vno.maximum_bw 910 can specify the maximum bandwidth that can be allocated to the VNO. The vno.maximum_bw 910 can specify an upper limit for resource allocation, preventing individual VNOs from monopolizing network capacity and facilitating balanced resource distribution across multiple VNOs.

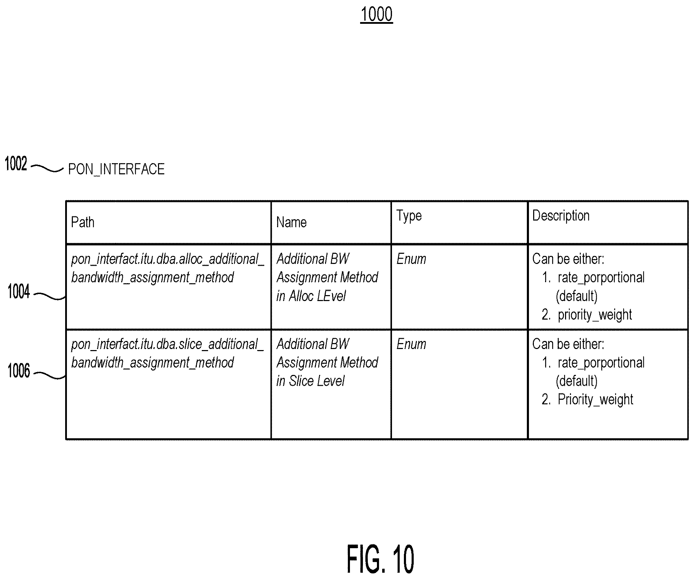

FIG. 10 illustrates an example object model 1000 for defining the structure and attributes of a PON_INTERFACE 1002 within a PON architecture corresponding to a slicing framework. The object model 1000 can define attributes of an object, referred to herein as the PON_INTERFACE 1002, that provide flexible and efficient bandwidth allocation mechanisms within the PON architecture. The PON_INTERFACE 1002 can include configuration options for bandwidth allocations at the allocation identifier (alloc) level and the slice level to facilitate QoS management.

As shown, the pon_interfact.itu.dba.alloc_additional_bandwidth_assignment_method 1004 (also referred to herein as the alloc assignment method 1004) can specify the method used for additional bandwidth allocation at the alloc level. The alloc assignment method 1004 can support a default rate-proportional method, where additional bandwidth is distributed proportionally to the rates of allocs, and a priority-weight method, where additional bandwidth is allocated based on predefined priority weights assigned to each alloc. Similarly, the pon_interfact.itu.dba.slice_additional_bandwidth_assignment_method 1006 (also referred to herein as the slice assignment method 1006) can define the method for additional bandwidth assignment at the slice level. The slice assignment method 1006 can also support rate-proportional and priority-weight methods, allowing for a consistent approach to bandwidth management across multiple slices of the PON. The PON_INTERFACE 1002 can support dynamic and adaptive bandwidth allocation, such that resources are distributed efficiently to satisfy the QoS demands of allocs or slices within a multi-VNO PON framework.

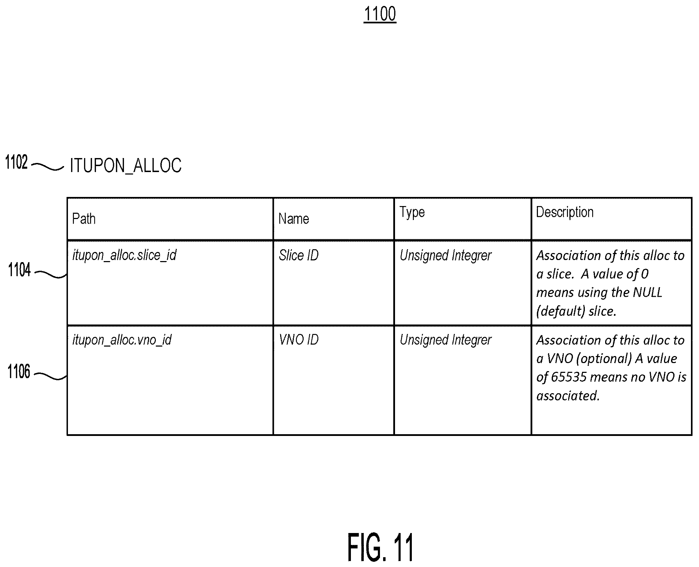

FIG. 11 illustrates an example object model 1100 for defining the structure and attributes of the ITUPON_ALLOC 1102 within a PON architecture corresponding to a slicing framework. The ITUPON_ALLOC 1102 can provide associations between allocation identifiers (allocs) and slices or VNOs within the PON architecture. The itupon_alloc.slice_id 1104 can specify the association of an alloc to a slice, where a value of 0 can indicate the default or "NULL" slice. This association can be used to manage traffic flows effectively, particularly when operating in legacy or non-slice-aware modes. The itupon_alloc.vno_id 1106 can specify the association of an alloc to a specific VNO. For example, a value of 65535 can indicate that no VNO is associated with the alloc, allowing for flexible resource allocation within the network. The ITUPON_ALLOC 1102 can support bandwidth allocation methods, such as priority or weight-based methods at the slice level, to provide granular control over resource distribution. In some embodiments, the PON slicing framework may not define a separate fixed constant bit rate (CBR) bandwidth property for a slice. In this regard, the ITUPON_ALLOC 1102 can associate allocation identifiers with slices or VNOs to facilitate fixed and assured bandwidth allocation.

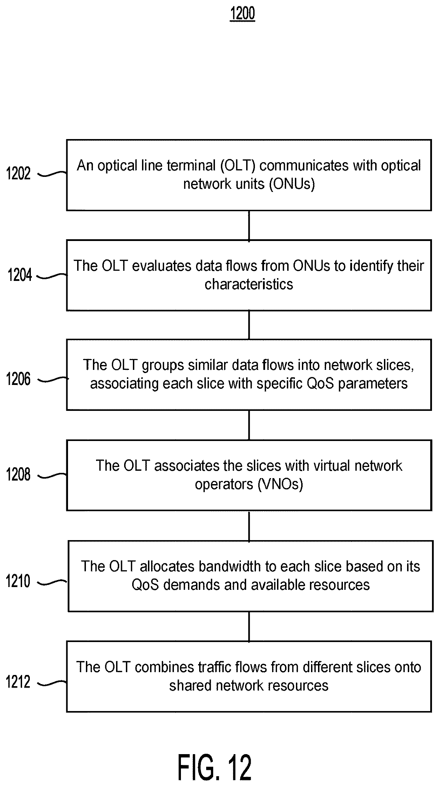

FIG. 12 illustrates a method 1200 of implementing network slicing in optical access networks. The method 1200 can be implemented using any of the disclosed systems or any other features discussed in FIGS. 1-11. The method 1200 can include acts 1202-1212. The Acts 1202-1212 can be executed in any order or sequence. At 1202, an optical line terminal (OLT) can communicate with optical network units (ONUs). At 1204, the OLT can evaluate data flows from ONUs to identify their characteristics. At 1206, the OLT can group similar data flows into network slices, associating each slice with specific QoS parameters. At 1208, the OLT can associate the slices with virtual network operators (VNOs). At 1210, the OLT can allocate bandwidth to each slice based on its QoS demands and available resources. At 1212, the OLT combines traffic flows from different slices onto shared network resources.

At 1202, the OLT can communicate with ONUs. The OLT can communicate with ONUs using standardized protocols, such as passive optical network (PON), which can define message formats and procedures for control functions. In some embodiments, the OLT can be physically installed in a central office or data center, and the ONU can be installed at the customer's premises. In some embodiments, the connection between the OLT and ONU can be established using fiber optic cables, which can transmit data using pulses of light. For example, the network can use fiber optic cables that run from the OLT to a passive optical splitter, which can split the signal from the OLT to serve multiple ONUs. The ONU can be configured to receive the messages and respond.

At 1204, the OLT can evaluate data flows from ONUs to identify their characteristics. The OLT can decode and evaluate optical signals received from the ONUs to identify identifiers associated with each ONU. For example, the OLT can identify a plurality of allocation identifiers corresponding to a plurality of ONUs in the PON, with each allocation identifier having one or more properties. The allocation identifiers can be associated with specific properties, including bandwidth demands (the data rate desired by the ONU), latency sensitivity (the tolerance for delay in data transmission), priority level (the relative importance of the ONU's traffic), and service type (the type of service provided to the ONU, such as voice, data, or video). The OLT can associate one or more allocation identifiers with the specific data streams or flows of each ONU connected to the PON. The OLT can use the allocation identifiers as reference points for managing the ONU's traffic and resource allocation. For example, the OLT can map the allocation identifiers to the corresponding data streams for effective tracking and management of upstream data.

At 1206, the OLT can group similar data flows into network slices, associating each slice with specific quality of service (QoS) parameters. The OLT can establish one or more slices. For example, the OLT can generate multiple virtual network partitions, known as slices. Each slice can include a set of allocation identifiers corresponding to data flows that share common properties, such as bandwidth demands, latency sensitivity, or priority level. The OLT can associate each allocation identifier with one or more slices, such that the data stream corresponding to the allocation identifier is mapped to the appropriate slice. Each slice can be defined by descriptor parameters, which can include fixed bandwidth (a guaranteed minimum allocation), assured bandwidth (bandwidth typically available but adjustable during congestion), maximum bandwidth (the upper limit of bandwidth for the slice), eligibility indicators (defining eligibility for additional bandwidth), and priority settings (establishing the slice's relative importance), among others.

At 1208, the OLT can associate the slices with virtual network operators (VNOs). For example, the OLT can associate slices with VNOs such that each VNO receives the appropriate level of service based on predefined service levels. These service levels, such as golden, silver, and bronze, can be characterized based on specific priorities or bandwidth guarantees. For example, the golden slice can provide high priority or high guaranteed bandwidth for low latency services such as online gaming or virtual reality. The silver slice can provide moderate priority and bandwidth for services such as IPTV or video streaming, and the bronze slice can deliver low priority and best-effort bandwidth for less critical services such as internet browsing.

Each slice can have defined properties, including guaranteed bandwidth, maximum bandwidth, priority, or weight for best-effort bandwidth assignment. The OLT can assign one or more VNOs to each slice based on their service demands. The OLT can implement flexible resource allocation where a VNO can be associated with multiple slices or multiple VNOs can be associated with the same slice. Within each slice, the OLT can configure allocation identifiers to specify specific bandwidth allocations for VNOs. The OLT can verify that the total bandwidth assigned to the allocation identifiers within a VNO does not exceed the VNO's preconfigured or predefined bandwidth, such as the guaranteed bandwidth. To enhance network performance, the OLT can modify slice bandwidth based on current network conditions or data flow characteristics. The OLT can apply rate-proportional or priority-based allocation methods to distribute additional bandwidth among slices or allocation identifiers.

In some embodiments, the OLT can manage the one or more slices and the one or more VNOs using predefined objects, with each object specifying attributes and relationships for a corresponding slice, VNO, or allocation identifier. In this regard, the PON_SLICE object can specify a slice, which can be a collection of one or more allocation identifiers or flows. The PON_SLICE object can include various attributes, such as a unique slice ID, an optional description (e.g., golden slice, low latency slice, etc.), association with a PON interface, guaranteed and maximum bandwidth, priority, weight for best-effort bandwidth assignment, and a split threshold to control latency and jitter. The PON_SLICE object can also support statistical tracking for each slice across bandwidth eligibility classes. Each slice can be associated with multiple allocation identifiers. The slices can be shared among multiple VNOs or dedicated to a single VNO. The VNO object can specify a VNO and defines attributes such as a VNO ID, an optional description, and parameters for guaranteed and maximum bandwidth. Each VNO can be associated with multiple slices, and the sum of bandwidth, such as the guaranteed bandwidth, for all allocation identifiers within a VNO cannot exceed the VNO's preconfigured guaranteed bandwidth. The ITUPON_ALLOC object can specify an allocation identifier and its association with slices and VNOs. The ITUPON_ALLOC object can include attributes, such as slice ID (indicating the association of the allocation identifier with a slice, with 0 indicating the NULL slice) and the VNO ID (optional, with 65535 indicating no VNO association). Each allocation identifier is to adhere to the bandwidth and priority parameters of its associated slice and may not belong to more than one slice or VNO. The PON_INTERFACE object can indicate the PON interface and its configuration for bandwidth assignment, defining methods for additional bandwidth allocation at both the allocation identifier and slice levels, which can use rate-proportional or priority-weight methods.

At 1210, the OLT can allocate bandwidth to each slice based on its QoS demands and available resources. The OLT can allocate a portion of bandwidth to each of the one or more slices associated with a respective VNO. The OLT can dynamically update the bandwidth based on a rate proportion or a priority level associated with each slice. The OLT can monitor network traffic continuously and can adjust bandwidth allocations in real time or near real-time to improve network performance. In some embodiments, the OLT can allocate bandwidth using a rate-proportional method, where additional bandwidth is distributed among slices in proportion to their respective rates. For example, if slice A requires 40% of the total bandwidth and slice B requires 60%, the OLT can allocate additional bandwidth in the same proportion. In some embodiments, the OLT can use a priority-based method, where slices with higher priority levels are allocated bandwidth first. For example, if slice A has a higher priority than slice B, the OLT can allocate additional bandwidth to slice A before allocating any remaining bandwidth to slice B.

The OLT can classify slices into types based on service demands. For a bronze slice, for example, used for basic Ethernet services with low bandwidth demands and relaxed latency or jitter constraints, the OLT can allocate a minimum amount of bandwidth to maintain basic connectivity. For a silver slice, configured for low-interaction services such as web browsing and email, the OLT can allocate moderate bandwidth with improved latency and jitter performance. For a golden slice, reserved for high-interaction services such as video conferencing, online gaming, and virtual reality, the OLT can allocate significant bandwidth to satisfy the high demands for low latency, low jitter, and high throughput, prioritizing it over other slices.

In some embodiments, the OLT can update the bandwidth of the set of allocation identifiers (alloc IDs) within a corresponding slice based on a rate proportion or a priority level associated with each alloc ID. For example, the OLT can distribute additional bandwidth using a rate-proportional method, where each alloc ID receives a portion of the additional bandwidth proportional to its rate. For example, if alloc ID A requires 30% of the total bandwidth and alloc ID B requires 70%, the OLT can allocate additional bandwidth in the same proportion, providing 30% to alloc ID A and 70% to alloc ID B. In some embodiments, the OLT can allocate bandwidth using a priority-based method, where alloc IDs with higher priority levels are given bandwidth first. For example, if alloc ID A has a higher priority than alloc ID B, the OLT can allocate additional bandwidth to alloc ID A before meeting the demands of alloc ID B.

At 1212, the OLT combines traffic flows from different slices onto shared network resources. For example, the OLT can interleave one or more slices associated with one or more VNOs. During the provisioning stage, the OLT can configure allocation identifiers with specific slice IDs and VNO IDs. The OLT can configure parameters for each slice, including guaranteed bandwidth, maximum bandwidth, priority, or weight. The OLT can continuously monitor traffic flows and dynamically adjust bandwidth allocations for each slice. The OLT can implement interleaving by alternating segments of bandwidth assigned to each slice in real-time or near real-time, based on current network conditions and slice demands. For example, if two VNOs each have a slice desiring high-priority bandwidth for latency-sensitive services such as online gaming, the OLT can allocate bandwidth in smaller, alternating segments rather than large contiguous blocks.

It should be noted that certain passages of this disclosure may reference terms such as "first" and "second" in connection with devices, modes of operation, transmit chains, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected (which may refer to electronic or communicative coupling or connection, such as for the purposes of data transmission) include indirect and direct couplings and connections.

While the disclosure has been described with respect to specific embodiments, one skilled in the art will recognize that numerous modifications are possible. For instance, although specific examples of rules (including triggering conditions and/or resulting actions) and processes for generating suggested rules are described, other rules and processes can be implemented. Embodiments of the disclosure can be realized using a variety of computer systems and communication technologies including but not limited to specific examples described herein.

Embodiments of the present disclosure can be realized using any combination of components and/or programmable processors and/or other programmable devices. The various processes described herein can be implemented on the same processor or different processors in any combination. Where components are described as being configured to perform certain operations, such configuration can be accomplished, e.g., by designing electronic circuits to perform the operation, by programming programmable electronic circuits (such as microprocessors) to perform the operation, or any combination thereof. Further, while the embodiments described above may make reference to specific hardware and software components, those skilled in the art will appreciate that different combinations of hardware and/or software components may also be used and that particular operations described as being implemented in hardware might also be implemented in software or vice versa.

Computer programs incorporating various features of the present disclosure may be encoded and stored on various computer readable storage media; suitable media include magnetic disk or tape, optical storage media such as compact disk (CD) or DVD (digital versatile disk), flash memory, and other non-transitory media. Computer readable media encoded with the program code may be packaged with a compatible electronic device, or the program code may be provided separately from electronic devices (e.g., via Internet download or as a separately packaged computer-readable storage medium).

Thus, although the disclosure has been described with respect to specific embodiments, it will be appreciated that the disclosure is intended to cover all modifications and equivalents within the scope of the following claims.

It should be understood that the disclosed embodiments are not representative of all claimed innovations. As such, certain aspects of the disclosure have not been discussed herein. That alternate embodiments may not have been presented for a specific portion of the innovations or that further undescribed alternate embodiments may be available for a portion is not to be considered a disclaimer of those alternate embodiments. Thus, it is to be understood that other embodiments can be utilized and functional, logical, operational, organizational, structural and/or topological modifications may be made without departing from the scope of the disclosure. As such, all examples and/or embodiments are deemed to be non-limiting throughout this disclosure.

Some embodiments described herein relate to methods. It should be understood that such methods can be computer implemented methods (e.g., instructions stored in memory and executed on processors). Where methods described above indicate certain events occurring in a certain order, the ordering of certain events can be modified. Additionally, certain of the events can be performed repeatedly, concurrently in a parallel process when possible, as well as performed sequentially as described above. Furthermore, certain embodiments can omit one or more described events.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules may include, for example, a general-purpose processor, a field-programmable gate array (FPGA), and/or an application-specific integrated circuit (ASIC). Software modules (executed on hardware) can be expressed in a variety of software languages (e.g., computer code), including C, C++, Java^{™}, Ruby, Visual Basic^{™}, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, embodiments can be implemented using Python, Java, JavaScript, C++, and/or other programming languages and software development tools. For example, embodiments may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

The drawings primarily are for illustrative purposes and are not intended to limit the scope of the subject matter described herein. The drawings are not necessarily to scale; in some instances, various aspects of the subject matter disclosed herein can be shown exaggerated or enlarged in the drawings to facilitate an understanding of different features. In the drawings, like reference characters generally refer to like features (e.g., functionally similar and/or structurally similar elements).

The acts performed as part of a disclosed method(s) can be ordered in any suitable way. Accordingly, embodiments can be constructed in which processes or steps are executed in an order different than illustrated, which can include performing some steps or processes simultaneously, even though shown as sequential acts in illustrative embodiments. Put differently, it is to be understood that such features may not necessarily be limited to a particular order of execution, but rather, any number of threads, processes, services, servers, and/or the like that may execute serially, asynchronously, concurrently, in parallel, simultaneously, synchronously, and/or the like in a manner consistent with the disclosure. As such, some of these features may be mutually contradictory, in that they cannot be simultaneously present in a single embodiment. Similarly, some features are applicable to one aspect of the innovations, and inapplicable to others.

Where a range of values is provided, it is understood that each intervening value, to the tenth of the unit of the lower limit unless the context clearly dictates otherwise, between the upper and lower limit of that range and any other stated or intervening value in that stated range is encompassed within the disclosure. That the upper and lower limits of these smaller ranges can independently be included in the smaller ranges is also encompassed within the disclosure, subject to any specifically excluded limit in the stated range. Where the stated range includes one or both of the limits, ranges excluding either or both of those included limits are also included in the disclosure.

The phrase "and/or," as used herein in the specification and in the embodiments, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the embodiments, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the embodiments, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of." "Consisting essentially of," when used in the embodiments, shall have its ordinary meaning as used in the field of patent law.

As used herein in the specification and in the embodiments, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the embodiments, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

## Claims

1. A method comprising:
identifying, by one or more processors, a plurality of allocation identifiers corresponding to a plurality of optical network units, ONUs, in a passive optical network, PON, each of the plurality of allocation identifiers having one or more properties;
establishing, by the one or more processors, one or more slices, each of the one or more slices comprising a set of allocation identifiers of one or more flows having a common property of the one or more properties;
allocating, by the one or more processors, a portion of bandwidth to each of the one or more slices; and
associating, by the one or more processors, the one or more slices with one or more virtual network operators, VNOs.

2. The method as set forth in the preceding claim, further comprising
associating, by the one or more processors, each allocation identifier of the plurality of allocation identifiers with a data stream in the PON, wherein the data stream is associated with a slice of the one or more slices.

3. The method as set forth in any one of the preceding claims, wherein
each slice is associated with descriptor parameters, the descriptor parameters comprising at least one of fixed bandwidth, assured bandwidth, maximum bandwidth, eligibility indicators, or priority settings.

4. The method as set forth in any one of the preceding claims, further comprising
associating, by the one or more processors, each ONU with the plurality of allocation identifiers, wherein each allocation identifier associated with the ONU is associated with the one or more slices.

5. The method as set forth in any one of the preceding claims, further comprising
updating, by the one or more processors, the bandwidth of the one or more slices based at least on a rate proportion or a priority level associated with the corresponding slice.

6. The method as set forth in any one of the preceding claims, further comprising
updating, by the one or more processors, the bandwidth of the set of allocation identifiers of the corresponding slice based at least on a rate proportion or a priority level associated with each allocation identifier.

7. The method as set forth in any one of the preceding claims, further comprising
interleaving, by the one or more processors, the one or more slices associated with the one or more VNOs.

8. The method as set forth in any one of the preceding claims, further comprising
limiting, by the one or more processors, a total bandwidth for all allocation identifiers associated with each VNO to a predefined bandwidth limit.

9. The method as set forth in any one of the preceding claims, further comprising
managing, by the one or more processors, the one or more slices and the one or more VNOs using predefined objects, each predefined object specifying attributes and relationships for a corresponding slice or VNO.

10. The method as set forth in any one of the preceding claims, further comprising
associating, by the one or more processors, the one or more VNOs with a slice of the one or more slices, wherein each slice supports a service level of a plurality of service levels, each service level corresponding to a predefined priority or bandwidth allocation.

11. A system, comprising:
one or more processors, coupled with memory and configured to control and/or carry out a method as set forth in any one of the preceding claims.
identify a plurality of allocation identifiers corresponding to a plurality of optical network units, ONUs, in a passive optical network, PON, each of the plurality of allocation identifiers having one or more properties;
establish one or more slices, each of the one or more slices comprising a set of allocation identifiers of one or more flows having a common property of the one or more properties;
allocate a portion of bandwidth to each of the one or more slices; and
associate the one or more slices with one or more virtual network operators, VNOs.

12. A system, comprising:
one or more processors, coupled with memory, to:
monitor network traffic on a passive optical network (PON) to determine bandwidth usage for each of a plurality of optical network units (ONUs); and
dynamically adjust bandwidth allocation to one or more ONUs based on the bandwidth usage,
wherein the dynamic adjustment comprises increasing bandwidth allocation to an ONU experiencing high bandwidth demand and decreasing bandwidth allocation to an ONU experiencing low bandwidth demand.
